# EUROPÄISCHE PATENTANMELDUNG

(11) **EP 2 159 203 A1**
(43) Veröffentlichungstag der Anmeldung: **03.03.2010**
(21) Anmeldenummer: 08162982.6
(22) Anmeldetag: 26.08.2008
(51) Int. Cl.: C04B 24/26, C04B 40/00

(54) **Zusatzmittel für hydraulisch abbindende Systeme mit verbesserter Verarbeitbarkeit und geringer Wasserreduktionsrate**

(71) Anmelder: Sika Technology AG, 6340 Baar (CH)
(72) Erfinder: Frunz, Lukas, 8057 Zürich (CH); Sulser, Ueli, 8103 Unterengstringen (CH); Zimmermann, Joerg, 8046 Zuerich (CH); Gresser, Juergen, 79725 Laufenburg (DE)
(74) Vertreter: Sika Patent Attorneys

(57) **Zusammenfassung**

Die vorliegende Erfindung betrifft die Verwendung eines Zusatzmittels umfassend mindestens ein Polymer P zur Herstellung von hydraulisch abbindenden Zusammensetzungen mit verlängerter Verarbeitbarkeit und einer Wasserreduktionsrate von 5 bis 15 % verglichen mit hydraulisch abbindenden Zusammensetzungen ohne wasserreduzierendes Zusatzmittel. Das Polymer P umfasst mindestens eine Säureeinheit und mindestens eine Ester-, Ether-, Amid- und/oder Imideinheit umfassend Poly(oxyalkylen)gruppen, und weist ein Molverhältnis der Säureeinheiten zu den Poly(oxyalkylen)gruppen umfassenden Einheiten von zwischen 1 und 2 auf.

## Beschreibung

### Technisches Gebiet

Die vorliegende Erfindung betrifft das Gebiet der Zusatzmittel für hydraulisch abbindende Systeme, insbesondere der Dispergiermittel für Betonzusammensetzungen.

### Stand der Technik

Polymere aus α- β-ungesättigten Carbonsäuren mit Polyalkylenglykol-Seitenketten, sogenannte Polycarboxylate, werden bereits seit längerem in der Betontechnologie als Dispergiermittel, insbesondere als Hochleistungsverflüssiger, wegen ihrer starken Wasserreduktion eingesetzt. Diese Polymere haben eine Kammpolymerstruktur. Diese Polymere verbessern bei gleichem Wasser/Zement (w/z) - Wert die Verarbeitbarkeit des Betons oder vermindern bei gleicher Verarbeitbarkeit den Wasseranspruch und damit den w/z-Wert, was zu einer Erhöhung der Druckfestigkeit und der Dichtigkeit führt.
Die herkömmlichen Polycarboxylate vermindern bei gleicher Verarbeitbarkeit den Wasseranspruch und damit den w/z-Wert um etwa 20 bis 30 %, verglichen mit Betonzusammensetzungen ohne diese Polymere. Verflüssiger mit einer solch starken Wasserreduktion werden als Hochleistungsverflüssiger bezeichnet. Für gewisse Anwendungen, beispielsweise für Transportbeton der Festigkeitsklasse C20 mit beispielsweise einem Zementanteil von 265 kg pro Kubikmeter Beton und Wasserreduktionsrate 10% oder Transportbeton der Festigkeitsklasse C30 mit einem Zementanteil von 295 kg pro Kubikmeter Beton und Wasserreduktionsrate 12-15%, ist eine geringere Wasserreduktionsrate von höchstens 15 % erwünscht. Dies kann mit herkömmlichen Polycarboxylaten nur erreicht werden, wenn sie in geringer Dosierung eingesetzt werden, was zu einem schnellen Abfall des Ausbreitmasses und somit zu einer verminderten Verarbeitbarkeit führt. Gerade bei Transportbeton ist aber eine verlängerte Verarbeitbarkeit erwünscht, da der Beton über einen bestimmten Zeitpunkt transportiert werden muss, beispielsweise von der Produktion zur Verarbeitungsstätte. Entsprechend ist es Stand der Technik, dass für Anwendungen mit geringer Wasserreduktionsrate keine Hochleistungsverflüssiger, sondern Verflüssiger der ersten Generation, beispielsweise Melamin-Sulfonsäure-Formaldehyd Kondensate eingesetzt werden. Diese Verflüssiger sind jedoch wegen der Freisetzung des toxischen Formaldehyds ökologisch problematisch und daher nicht erwünscht. Andere bekannte Verflüssiger mit geringer Wasserreduktionsrate basieren auf Lignin- oder Naphthalinsulfonaten, wie beispielsweise in WO02081400A1 beschrieben. Solche Verflüssiger weisen den Nachteil auf, dass sich die damit hergestellten Zusammensetzungen verfärben. Zudem müssen diese bekannten Verflüssiger in relativ hohen Dosierungen eingesetzt werden um die gewünschte Wasserreduktionsrate zu erreichen und gewährleisten dennoch eine deutlich verminderte Verarbeitbarkeit. Zudem weisen solche Verflüssiger der ersten Generation trotz höherer Dosierung eine zum Teil ungenügende Verarbeitbarkeit auf.
Es hat sich nun gezeigt, dass die bekannten Betonverflüssiger nur bedingt für hydraulisch abbindende Zusammensetzungen mit geringer Wasserreduktionsrate bei gleichbleibender Verarbeitbarkeit eingesetzt werden können. Die bekannten Betonverflüssiger müssen entweder in so kleinen Dosierungen eingesetzt werden, dass sich die Verarbeitbarkeit verschlechtert oder sie müssen in hohen Dosierungen eingesetzt werden um die gewünschte Wasserreduktionsrate zu erreichen, so dass die Zusammensetzung kaum noch abbindet.

### Darstellung der Erfindung

Aufgabe der vorliegenden Erfindung ist es daher, Dispergiermittel zur Verfügung zu stellen, bei denen die Nachteile des Standes der Technik überwunden werden, und welche geeignet sind, eine ausreichende Verflüssigungswirkung, das heisst eine gewünschte Wasserreduktionsrate von 5 bis 15 % zu erreichen und eine verlängerte Verarbeitbarkeit von hydraulisch abbindenden Zusammensetzungen zu erzielen.
Überraschenderweise wurde gefunden, dass dies durch die Verwendung eines Zusatzmittels umfassend mindestens ein Polymer **P** gemäss Anspruch 1 erreicht werden kann. Es konnte festgestellt werden, dass mit Polymeren, welche mindestens eine Säureeinheit und mindestens eine Einheit, vorzugsweise eine Ester- und/oder Amideinheit, umfassend Poly(oxyalkylen)gruppen enthalten, und welche ein Molverhältnis der Säureeinheiten zu den Poly(oxyalkylen)gruppen umfassenden Einheiten von zwischen 1 und 2 aufweisen, die gewünschte Wasserreduktionsrate von 5 bis 15 % bei verlängerter Verarbeitbarkeit erreicht werden kann. Weiterhin hat sich gezeigt, dass diese Polymere zur Wasserreduktion von hydraulisch abbindenden Zusammensetzungen eingesetzt werden können und dass sie das Abbinden weder zu stark verzögern noch zu stark beschleunigen. Ebenfalls sind mit diesen Polymeren Zusammensetzungen möglich, die sich nicht verfärben.
Die Erfindung umfasst zudem ein Verfahren zur Herstellung einer hydraulisch abbindenden Zusammensetzung mit verlängerter Verarbeitbarkeit sowie ein Dispergiermittel für hydraulisch abbindende Zusammensetzungen umfassend mindestens ein Polymer **P** und mindestens einen weiteren Verflüssiger. Weitere vorteilhafte Ausgestaltungen der Erfindung ergeben sich aus den Unteransprüchen.

### Wege zur Ausführung der Erfindung

Die vorliegende Erfindung betrifft die Verwendung eines Zusatzmittels umfassend mindestens ein Polymer **P** zur Herstellung von hydraulisch abbindenden Zusammensetzungen mit verlängerter Verarbeitbarkeit und einer Wasserreduktionsrate von 5 bis 15 %, verglichen mit hydraulisch abbindenden Zusammensetzungen ohne wasserreduzierendes Zusatzmittel.

Das Zusatzmittel umfasst mindestens ein Polymer **P** und kann insbesondere verwendet werden als Dispergiermittel, als Verflüssiger, als Wasserreduzierer oder zur Verbesserung der Verarbeitbarkeit und der Fliessfähigkeit der damit hergestellten hydraulisch abbindenden Zusammensetzungen. Insbesondere können mit dem Zusatzmittel umfassend mindestens ein Polymer **P** hydraulisch abbindenden Zusammensetzungen mit verlängerter Verarbeitbarkeit und einer Wasserreduktionsrate von 5 bis 15 % hergestellt werden. Das Zusatzmittel kann neben dem Polymer **P** weitere Bestandteile enthalten. Beispiele für weitere Bestandteile sind Lösungsmittel oder Additive, wie andere Verflüssiger, beispielsweise Lignosulfonate, sulfonierte Naphthalin-Formaldehyd-Kondensate, sulfonierte Melamin-Formaldehyd-Kondensate oder Polycarboxylatether (PCE), Beschleuniger, Verzögerer, Schwindreduzierer, Entschäumer, Luftporenbildner oder Schaumbildner. Typischerweise beträgt dabei der Anteil des Polymeren **P** 5 bis 100 Gewichts-%, insbesondere 10 bis 100 Gew.-%, bezogen auf das Gesamtgewicht des Zusatzmittels.

Unter dem Begriff "wasserreduzierendes Zusatzmittel" versteht man ein dem Fachmann bekanntes Zusatzmittel, welches den Wasserbedarf zur Herstellung von hydraulisch abbindenden Zusammensetzungen reduziert wie beispielsweise Verflüssiger, Fliessmittel oder Dispergiermittel. Solche Zusatzmittel sind beispielsweise Lignosulfonate, sulfonierte Naphthalin-Formaldehyd-Kondensate, sulfonierte Melamin-Formaldehyd-Kondensate oder Polycarboxylatether (PCE).

Unter dem Begriff "Wasserreduktionsrate" versteht man die verminderte Wassermenge, welche benötigt wird, um eine hydraulisch abbindende Zusammensetzung mit gleichem Anfangsausbreitmass zu erhalten, verglichen mit hydraulisch abbindenden Zusammensetzungen ohne wasserreduzierendes Zusatzmittel. Die Wasserreduktionsrate wird in Prozent angegeben und als Grundwert wird eine hydraulisch abbindende Zusammensetzung ohne Zusatzmittel, d.h. ohne Polymer **P** oder andere Dispergiermittel oder Verflüssiger genommen. Die erfindungsgemässe Wasserreduktion bei hydraulisch abbindenden Zusammensetzung beträgt erfindungsgemäss zwischen 5 und 15 %, bevorzugt zwischen 10 und 15 %.

Unter dem Begriff "verlängerte Verarbeitbarkeit" versteht man, dass die hydraulisch abbindende Zusammensetzung nach Zugabe von einer definierten Menge Wasser und einer bestimmten Menge an Zusatzmittel umfassend das Polymer **P** noch über eine längere Zeit verarbeitbar bleibt als Zusammensetzungen, welche kein Polymer **P** umfassen und auch als Zusammensetzungen, welche andere wasserreduzierende Zusatzmittel wie herkömmliche Verflüssiger umfassen, wobei die Zusammensetzungen ohne Polymer **P** und eventuell mit herkömmlichem wasserreduzierenden Zusatzmittel den gleichen Wasser/Zement Wert (w/z-Wert), bei vergleichbarem Anfangsausbreitmass, welches über die Dosierungsmenge des Vergleichsverflüssigers eingestellt wird, aufweisen. Dies bedeutet, dass das Ausbreitmass von hydraulisch abbindenden Zusammensetzungen welche das Polymer **P** enthalten nach einer bestimmten Zeit, beispielsweise nach einer Stunde oder nach 90 Minuten, mehr oder weniger aufrecht erhalten bleibt oder nur wenig abnimmt, je nach Zusammensetzung vorzugsweise weniger als 15 bis 20%, noch mehr bevorzugt weniger als 10% abnimmt, während die Verarbeitbarkeit wie auch das Ausbreitmass bei hydraulisch abbindenden Zusammensetzungen mit herkömmlichen Verflüssiger aber ohne Polymer **P** beispielsweise nach einer Stunde stark abnimmt. Die Verarbeitbarkeit ist somit mit Zusammensetzungen enthaltend das Polymer **P** über längere Zeit gewährleistet als wenn der hydraulisch abbindenden Zusammensetzung kein Polymer **P** zugegeben wird. Somit kann das Polymer **P** auch zur Aufrechterhaltung der Verarbeitbarkeit für mindestens 60 Minuten, bevorzugt für mindestens 90 Minuten, bei hydraulisch abbindenden Zusammensetzungen verwendet werden.

Unter den Begriff "hydraulisch abbindende Zusammensetzung" können grundsätzlich alle dem Beton-Fachmann bekannten hydraulisch abbindenden Substanzen verstanden werden. Insbesondere handelt es sich hier um hydraulische Bindemittel wie Zemente, wie beispielsweise Portlandzemente oder Tonerdeschmelzzemente und respektive deren Mischungen mit Flugaschen, Silica fume, Schlacke, Hüttensande und Kalksteinfiller. Weitere hydraulisch abbindende Substanzen im Sinne der vorliegenden Erfindung sind Gips, in Form von Anhydrit oder Halbhydrat, oder gebrannter Kalk. Als hydraulisch abbindende Zusammensetzung wird Zement bevorzugt. Weiterhin sind Zuschlagstoffe wie Sand, Kies, Steine, Quarzmehl, Kreiden sowie als Additive übliche Bestandteile wie andere Betonverfüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumer oder Porenbildner möglich.

Das Polymer **P**, welches sich erfindungsgemäss besonders zur Verwendung als Dispergiermittel in hydraulisch abbindenden Zusammensetzungen mit einer Wasserreduktionsrate von 5 bis 15 % eignet, umfasst
a) m Mol-% mindestens einer Säureeinheit **A** der Formel (I); und 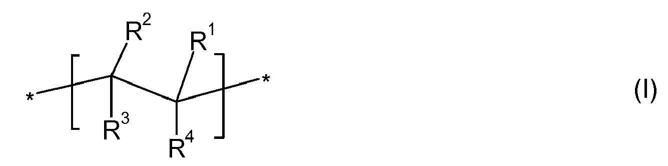
b) n Mol-% mindestens einer Struktureinheit **B** der Formel (II); 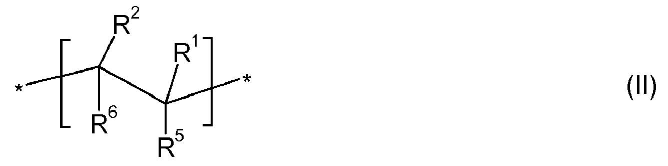 und gegebenenfalls
c) p Mol-% mindestens einer weiteren Struktureinheit **C**.

Dabei stehen je unabhängig voneinander R¹ und R² für H, COOM, CH₂COOM oder eine Alkylgruppe mit 1 bis 5 Kohlenstoffatomen, insbesondere für H oder CH₃, R³ steht unabhängig voneinander für H, CH₃, COOM oder CH₂COOM, insbesondere für H; und R⁴ steht unabhängig voneinander für einen Rest der Carbonsäure, insbesondere für COOM; oder R³ kann mit R⁴ einen Ring bilden zu -CO-O-CO-.
M bedeutet H, Alkalimetall, Erdalkalimetall oder andere zwei- oder dreiwertige Metallatome, Ammonium, Alkyl-Ammonium, oder eine Mischung davon. M kann insbesondere H, Na, Ca/2, Mg/2, NH₄ oder ein organisches Ammonium darstellen. Es ist dem Fachmann klar, dass bei den mehrwertigen Ionen ein weiteres Gegenion vorhanden sein muss, das unter anderem auch ein Carboxylat desselben oder eines anderen Moleküls des Polymers **P** sein kann. Die Ammoniumverbindungen sind insbesondere Tetraalkylammonium oder aber HR₃N, wobei R eine Alkylgruppe insbesondere eine C₁- bis C₆-Alkylgruppe, bevorzugt Ethyl oder Butyl, darstellt. Ammoniumionen werden insbesondere durch die Neutralisation der Carboxylgruppe mit handelsüblichen tertiären Aminen erhalten.

R⁵ steht unabhängig voneinander für einen Rest der Formel (III)

-(CH₂)ₓ - R⁷ - (R⁸O)_{y} - R⁹ (III)

Dabei steht R⁷ unabhängig voneinander für ein Ester-, Ether-, Amid- oder Imid-Verbindungsstück, vorzugsweise für ein Ester- oder Amid-Verbindungsstück, insbesondere für -COO- oder -CO-NH-. R⁸ steht für eine C₂ - C₆ Alkylengruppe, vorzugsweise eine C₂ - C₄ Alkylengruppe oder eine Mischung von C₂, C₃ und/oder C₄ Alkylengruppen in einer beliebigen Reihenfolge; und R⁹ steht für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst.

R⁶ steht unabhängig voneinander für H, CH₃, COOM oder CH₂COOM oder einen Substituenten wie für R⁵ definiert, vorzugsweise für H.

Der Index x weist unabhängig voneinander den Wert 0 oder 1 auf; und y steht unabhängig voneinander für den Wert 3 - 250, vorzugsweise für 5 bis 120.

Dabei bedeuten *m*, *n, p* unabhängig voneinander Zahlen, wobei die Summe *m*+*n*+*p* = 100, und *m*>0, *n*>0, und *p≥*0 bedeuten; und wobei das Verhältnis *m*/*n* zwischen 1 und 2, bevorzugt zwischen 1 und 1.9, beträgt.

Vorzugsweise steht m für eine Zahl von 30 - 66, vorzugsweise für 50 - 63, n für eine Zahl von 20 - 50, vorzugsweise für 34 - 44, und p für eine Zahl von 0 - 40, vorzugsweise für 0 - 1.

Das Verhältnis *m*/*n* bedeutet das Molverhältnis aller Carbonsäureeinheiten **A** zu allen Struktureinheiten **B**, das heisst zu allen Poly(oxyalkylen)gruppen umfassenden Einheiten, im Polymer **P**. Besonders gute Resultate werden erzielt, wenn dieses Verhältnis zwischen 1.1 und 1.8, insbesondere zwischen 1.2 und 1.7, noch mehr bevorzugt zwischen 1.2 und 1.6, beträgt.

Beispiele für geeignete Säureeinheiten **A** sind Einheiten, die durch Polymerisation entstehen von Acrylsäure, Methacrylsäure, Mesaconsäure, Citraconsäure, Glutactonsäure, Fumarsäure, Maleinsäure, Maleaminsäure, Itaconsäure, Vinylbenzoesäure, Crotonsäure, oder Derivate oder Analoga davon. Bevorzugt sind Monocarbonsäuren. Insbesondere geeignet als Säureeinheit **A** ist eine Einheit, entstanden durch Polymerisation einer (Meth)acrylsäureeinheit oder ein Salz davon. Unter "(Meth)acrylsäure" wird im gesamten vorliegenden Dokument sowohl Acrylsäure als auch Methacrylsäure oder Mischungen davon verstanden.

Vorzugsweise ist die mindestens eine Säureeinheit **A** der Formel (I) teilweise oder vollständig neutralisiert. Die Säureeinheit kann als freie Säure oder auch als Salz oder Teilsalz vorliegen, wobei der Term "Salz" hier und im Folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst.

In einer bevorzugten Ausführungsform steht beim Polymer **P** R⁵ unabhängig voneinander für -COO-(R⁸O)_{y}-R⁹ und/oder -CO-NH-(R⁸O)_{y}-R⁹, insbesondere für -COO-(R⁸O)_{y}-R⁹ oder ein Gemisch von COO-(R⁸O)_{y}-R⁹ und -CO-NH-(R⁸O)_{y}-R⁹, und -(R⁸O)_{y}- steht für eine C₂ - C₄ Polyoxyalkylengruppe, beispielsweise für eine Polyoxyethylengruppe, eine Polyoxypropylengruppe, eine Polyoxybuthylengruppe oder eine Polyoxyisobutylengruppe, insbesondere für eine Polyoxyethylengruppe oder eine Polyoxypropylengruppe oder Mischungen von Oxyethylen- und Oxypropyleneinheiten in irgendeiner möglichen Sequenz, beispielsweise zufällig, alternierend oder blockweise, und y steht für 3 bis 250, bevorzugt für 10bis 120. Bei einem bevorzugten Polymer **P** sind mindestens 30 Mol-%, besonders bevorzugt 50 - 100 Mol-%, noch mehr bevorzugt 80 - 100 Mol-%, am meisten bevorzugt 100 Mol-% der Struktureinheit **B** der Formel (II) durch eine Struktur dargestellt bei der R⁸ eine C₂-Alkylengruppe darstellt. Das heisst, R⁵ umfasst vorzugsweise mindestens 30 Mol-% (C₂H₄O)-Einheiten, vorzugsweise 50 bis 100 Mol-% (C₂H₄O)-Einheiten, noch mehr bevorzugt 80 bis 100 Mol-% (C₂H₄O)-Einheiten, bezogen auf die Gesamtmolmenge aller (R⁸O)-Einheiten. Insbesondere bevorzugt umfasst R⁵ 100 Mol-% (C₂H₄O)-Einheiten, bezogen auf die Gesamtmolmenge aller (R⁸O)-Einheiten. R⁹ kann je nach Herstellverfahren des Polymers **P** für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, stehen. Wird das Polymer **P** über die polymeranaloge Reaktion hergestellt, ist R⁹ vorzugsweise ein Methylrest, und steht nicht für ein Wasserstoffatom.

Besonders bevorzugt ist ein Polymer **P**, bei dem R¹ H oder CH₃ ist und R², R³, R⁶ für H stehen und R⁴ für COOM und M für H oder ein Alkali- oder Erdalkalimetall steht. Die Säureeinheit **A** der Formel (I) stellt somit vorzugsweise eine Acryl- oder Methacrylsäureeinheit oder Salze davon dar.

Die weitere Struktureinheit **C** kann eine weitere Ether-, Ester, Amid- oder Imideinheit, vorzugsweise eine Amid- oder Estereinheit umfassen. Beispielsweise kann die weitere Struktureinheit **C** Carbonsäure-, Sulfonsäure-, Phosphorsäureester-, Phosphonsäure-, Carbonylamidomethylpropansulfonsäure und deren Alkali oder Erdalkalisalze, Poly(oxyalkylen)oxycarbonyl, Poly(oxyalkylen)aminocarbonyl, Poly(oxy-alkylen)oxyalkyl-, Poly(oxyalkylen)oxy-, Hydroxyethyloxycarbonyl-, Acetoxy-, Phenyl- oder N-Pyrrolidonylgruppen umfassen. Vorzugsweise umfasst die weitere Struktureinheit **C** Polyoxyalkylengruppen, vorzugsweise Polyoxyethylengruppen, Polyoxypropylengruppen oder Mischungen davon. Beispielsweise kann die Struktureinheit **C** eine Estereinheit sein, welche durch Umsetzung einer Mono- oder Dicarbonsäure mit einem Alkylalkohol, insbesondere einem C₆-C₂₀ Alkylalkohol hergestellt wird.

Ein besonders bevorzugtes Polymer **P** umfasst oder besteht aus
a) m Mol-% mindestens einer Säureeinheit **A** der Formel (I'); 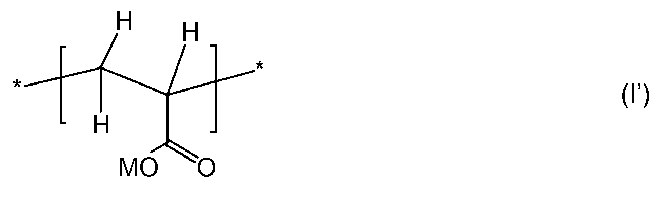 und
b) n Mol-% mindestens einer Struktureinheit **B** der Formel (II'); 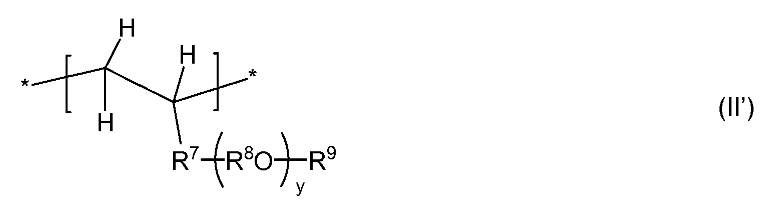
wobei M ein H, Na, Ca/2, Mg/2, NH₄ oder ein organisches Ammonium, vorzugsweise ein H darstellt,
wobei R⁷ für COO oder CONH steht,
wobei R⁸ für eine Ethylengruppe steht,
wobei R⁹ für eine C₁ bis C₁₂ Alkylgruppe, vorzugsweise eine Methylgruppe steht,
wobei y für 3 - 250, vorzugsweise 10 bis 100 steht,
und wobei das Molverhältnis *m*/*n* zwischen 1 und 2, insbesondere zwischen 1.2 und 1.6 beträgt.

Das Polymer **P** kann eine Kombination von verschiedenen Struktureinheiten der jeweiligen Struktureinheiten von **A**, **B**, und gegebenenfalls **C** aufweisen. Beispielsweise können mehrere Struktureinheiten **A** gemischt im Polymer **P** vorkommen, so zum Beispiel ein Gemisch von Methacrylsäureeinheiten mit Acrylsäureeinheiten. Oder es können mehrere unterschiedliche Ester- und/oder Amideinheiten **B** gemischt im Polymer **P** vorkommen, so zum Beispiel mehrere Estereinheiten **B** mit verschiedenen Substituenten R⁸. Bevorzugt ist beispielsweise die gemeinsame Verwendung von Poly(oxyalkylenen), insbesondere von Poly(oxyethylen) mit Poly(oxypropylen), oder die gemeinsame Verwendung von Poly(oxyalkylenen), insbesondere von Poly(oxyethylen), mit unterschiedlichem Molekulargewicht.

In einer bevorzugten Ausführungsform umfasst das Polymer **P** 30 bis 66 Mol-%, vorzugsweise 50 bis 63 Mol-% der Säureeinheit **A** der Formel (I), 20 bis 50 Mol-%, vorzugsweise 34 bis 44 Mol-% der Struktureinheit **B** der Formel (II), und gegebenenfalls 0 bis 40Mol-% der Struktureinheit **C**, jeweils bezogen auf die Gesamtmolmenge der Struktureinheiten von **A, B** und **C** im Polymer **P**.

Die Abfolge der einzelnen Struktureinheiten **A, B**, und **C** im Polymer **P** kann alternierend, statistisch, blockweise oder zufällig sein.

Das Polymer **P** weist vorzugsweise ein Molekulargewicht M_{w} im Bereich von 10'000 - 150'000 g/mol, vorzugsweise 15'000 - 100'000 g/mol, besonders bevorzugt 20'000-80'000 g/mol, auf.

Unter ,Molekulargewicht' oder ,Molgewicht' versteht man im Sinne der Erfindung das Molekulargewichtsmittel M_{w}.

Das Polymer **P** kann auf verschiedene Arten hergestellt werden. Es sind im Wesentlichen zwei Verfahren im Einsatz. In einem ersten Verfahren werden die Polymere in einer sogenannten polymeranalogen Umsetzung aus einem Polycarboxylat und den jeweiligen Alkoholen und/oder Aminen hergestellt. In einem zweiten Verfahren werden die Polymere aus den jeweiligen ungesättigten Carbonsäure-, und Ester-, Ehter-, Amid- und/oder Imid-funktionenellen Monomeren durch radikalische Polymerisation hergestellt.

Besonders bevorzugte Polymere werden nach der polymeranalogen Reaktion gemäss dem ersten Verfahren hergestellt. Die polymeranaloge Umsetzung weist den grossen Vorteil auf, dass aus kommerziell erhältlichen Polymeren aus α-,β-ungesättigten Säuren, insbesondere aus Mono- oder Dicarbonsäuren, speziell aus Poly(meth)acrylsäuren, durch Variation der Menge, der Art und dem Verhältnis von Alkohol und Amin, in einfacher und sicherer Weise sehr unterschiedliche Kammpolymere mit sehr unterschiedlichen Eigenschaften erhalten werden können. Solche polymeranalogen Umsetzungen sind beispielsweise in WO97/35814A1, WO95/09821A2, DE 100 15 135A1, EP 1138697A1, EP1348729A1 sowie WO2005/090416A1 beschrieben. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen. Polymer **P** kann auch in festem Aggregatszustand erhalten werden, wie in EP 1 348 729 A1 auf Seite 3 bis Seite 5 sowie in dessen Beispielen beschrieben.

Es wird also bevorzugt ein Polymer **P** verwendet, wobei das Polymer **P** erhältlich ist durch die Reaktion von (a) mindestens einer Polycarbonsäure oder einem Analogon einer Polycarbonsäure; und (b) mindestens einer Monohydroxyverbindung **E** und/oder mindestens einer Monoaminverbindung **F** umfassend mindestens eine Polyoxyalkylengruppe, und gegebenenfalls (c) mindestens eine weitere Verbindung **D**.

Unter Polycarbonsäure oder Analogon einer Polycarbonsäure versteht man ein Homo- oder Copolymer, welches durch Polymerisation von mindestens einem Monomer **a** und gegebenenfalls mindestens einem Monomer b erhalten werden kann. Monomer **a** ist ausgewählt aus der Gruppe umfassend ungesättigte Monocarbonsäuren, ungesättigte Dicarbonsäuren, Analoga derselben und Mischungen derselben. Ungesättigte Mono- oder Dicarbonsäuren umfassen vorzugsweise Maleinsäure, Itaconsäure, Fumarsäure, Citraconsäure, Glutaconsäure, Mesaconsäure oder Crotonsäure, insbesondere Acrylsäure oder Methacrylsäure. Unter Analogon einer Mono- oder Dicarbonsäure oder Polycarbonsäure versteht man im Sinne der vorliegenden Erfindung Säuresalze, Säurehalogenide, Säureanhydride und Säureester, im besonderen Alkyl-Säureester.
Monomer **b** ist vorzugsweise ausgewählt aus der Gruppe von ethylenisch ungesättigten Monomeren umfassend α- β-ungesättigte Mono- oder Dicarbonsäuren, α- β-ungesättigte Mono- oder Dicarbonsäureester, α- βungesättigte Carboxylate, Styrol, Ethylen, Propylen, Vinylacetat insbesondere Methacrylsäure, Acrylsäure, Crotonsäure, Itaconsäure, Maleinsäure, Fumarsäure, sowie deren Salze, Ester und Mischungen davon.

Bevorzugt als Copolymer ist ein Copolymer aus Acrylsäure und Methacrylsäure sowie deren Salze oder Teilsalze.
Bevorzugt als Homopolymer ist Polymethacrylsäure, deren Salze oder Teilsalze.
Die Polycarbonsäure oder das Analogon der Polycarbonsäure kann hierbei als freie Säure oder als Teilsalz vorliegen, wobei der Term "Salz" hier und im Folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst. Bei der Herstellung der Polycarbonsäure oder des Analogons der Polycarbonsäure sind allenfalls verwendete Initiatoren, CoInitiatoren und Polymerisationsregler gegebenenfalls so zu wählen, dass in Polymer **P** vorzugsweise keine reaktionsfähigen Hydroxyl- oder Aminfunktionen vorhanden sind.

Unter "Monohydroxy-Verbindung" wird hier und im Folgenden eine Substanz verstanden, die nur eine freie Hydroxylgruppe aufweist.
Unter "Monoamin-Verbindung" wird hier und im Folgenden eine Substanz verstanden, die nur eine freie Aminogruppe aufweist.

Das Homo- oder Copolymer der Polycarbonsäure oder des Anologons der Polycarbonsäure wird durch eine radikalische Polymerisation nach üblichen Verfahren erhalten. Sie kann in Lösungsmittel, bevorzugt in Wasser oder in Substanz, erfolgen. Diese radikalische Polymerisation erfolgt bevorzugt in Gegenwart von mindestens einem Molekulargewichtsregler, insbesondere einer anorganischen oder organischen Schwefelverbindung, wie beispielsweise Mercaptanen, oder einer Phosphorverbindung. Das Homo- oder Copolymer der Polycarbonsäure oder des Anologons der Polycarbonsäure weist vorzugsweise ein Molekulargewicht M_{w} von 500 bis 20'000 g/mol, bevorzugt von 2'000 bis 10'000 g/mol, insbesondere bevorzugt von 3'500 bis 6'500 g/mol, auf.

Die Monohydroxy-Verbindung **E** ist vorzugsweise mit unter üblichen Reaktionsbedingungen nicht reaktiven Endgruppen einseitig abgeschlossen. Bevorzugt handelt es sich hierbei um ein Polymer mit einem Polyalkylenglykol-Grundgerüst. Die Monohydroxy-Verbindung **E** weist die Formel (IV) auf

HO-(R⁸O)_{y}-R^{9'} (IV)

wobei R⁸ unabhängig voneinander eine C₂ - C₄ Alkylengruppe bedeutet mit einer Reihenfolge der (R⁸O)-Einheiten in irgendeiner möglichen Sequenz; wobei R^{9'} für einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht; und wobei y unabhängig voneinander für 3 bis 250, vorzugsweise 10 bis 120 steht.
Bevorzugt sind Monohydroxy-Verbindungen **E** der Formel (IV) mit einer Methyl-, Ethyl-, i-Propyl- oder n-Butylgruppe, insbesondere mit einer Methylgruppe, als Substituent R^{9'}. Vorzugsweise steht R⁸ unabhängig voneinander für eine C₂-Alkylengruppe und/oder eine C₃-Alkylengruppe. Bevorzugt handelt es sich bei **E** um Mischpolymerisate aus Ethylenoxid/Propylenoxid, mehr bevorzugt um einseitig endgruppenverschlossenes Polyethylenglykol.
Mischungen mehrerer unterschiedlicher Verbindungen der Gruppe **E** sind ebenfalls möglich. So können beispielsweise einseitig endgruppenverschlossene Polyethylenglykole mit unterschiedlichen Molekulargewichten gemischt werden, oder es können beispielsweise Mischungen von einseitig endgruppenverschlossenen Polyethylenglykolen mit einseitig endgruppenverschlossenen Mischpolymeren aus Ethylenoxid und Propylenoxid oder einseitig endgruppenverschlossenen Polypropylenglykolen verwendet werden.

Unter ,mit unter üblichen Reaktionsbedingungen nicht reaktiven Endgruppen abgeschlossen' versteht man im Sinne der Erfindung, dass anstelle von für die Veresterung oder Amidierung reaktiven funktionellen Gruppen solche Gruppen vorhanden sind, welche nicht mehr zur Reaktion befähigt sind. Die üblichen Reaktionsbedingungen sind diejenigen, welche der Fachmann für Veresterungen und Amidierungen kennt. Bei ,einseitig abgeschlossen' Verbindungen ist nur eine Seite nicht mehr zur Reaktion fähig.

In einer bevorzugten Ausführungsform ist die Monohydroxy-Verbindung **E** ein einseitig endgruppenverschlossenes Polyalkylenglykol mit einem Molekulargewicht M_{w} von 500 bis 10'000 g/mol, insbesondere von 800 bis 8000 g/mol, bevorzugt von 1000 bis 6000 g/mol. Geeignet ist auch eine Mischung von einseitig endgruppenverschlossenen Polyalkylenglykolen mit unterschiedlichem Molekulargewicht, beispielsweise die Mischung von Polyalkylenglykolen mit einem Molekulargewicht von 1'000 g/mol mit Polyalkylenglykolen mit einem Molekulargewicht von 5'000 g/mol.

Zusätzlich zur Monohydroxy-Verbindung **E** oder anstelle der Monohydroxy-Verbindung **E** kann im ersten Verfahren eine Monoaminverbindung **F** eingesetzt werden. Dadurch erfolgt die Bildung von Amidgruppen.

Typische Beispiele solcher Monoaminverbindungen **F** lassen sich durch die Formel (V) darstellen

NH₂-(R⁸O)_{y}-R⁹ (V)

Die Substituenten R⁸ und R⁹ beziehungsweise der Index y weisen unabhängig voneinander dieselben Bedeutungen auf wie sie bereits für die Formel (III) definiert wurden. R⁹ kann in der Formel (V) je nach Herstellverfahren des Polymers **P** für H, einen C₁ - C₁₂ Alkyl- oder Cycloalkylrest, einen C₇ - C₂₀ Alkylaryl- oder Aralkylrest, oder einen substituierten oder unsubstituierten Arylrest oder einen einwertigen organischen Rest mit 1 bis 30 C-Atomen, welcher gegebenenfalls Heteroatome umfasst, stehen. Wird das Polymer **P** über die polymeranaloge Reaktion hergestellt, und werden die gegebenenfalls gebildeten Anhydridgruppen nicht in einem zweiten Schritt vollständig oder teilweise mit einer Aminverbindung zu einem Amid umgesetzt, ist R⁹ der Formel (V) vorzugsweise R^{9'}, insbesondere ein Methylrest, und steht nicht für ein Wasserstoffatom.

Beispiele für solche Monoaminverbindungen **F** sind α-Methoxy-ω-Amino-Polyoxyethylen, α-Methoxy-ω-Amino-Polyoxypropylen, α-Methoxy-ω-Am ino-Oxyethylene-Oxypropylen-Copolymer.
Besonderes bevorzugt als Monoaminverbindungen **F** sind α-Methoxyw-Amino-Oxyethylen-Oxypropylen-Copolymere, wie beispielsweise Jeffamin® M-2070, oder α-Methoxy-ω-Amino-Polyoxyethylene, sowie andere Monoamine, welche beispielsweise von der Firma Huntsman unter dem Namen Jeffamine® der M-Serie vertrieben werden, sowie Mischungen davon. Meist bevorzugt sind α-Methoxy-ω-Amino-Oxyethylen-Oxypropylen-Copolymere. Solche Monoaminverbindungen **F** sind beispielsweise erhältlich aus einer mit Alkohol gestarteten Polymerisation von Ethylen- und/oder Propylenoxid gefolgt von Umwandlung der terminalen Alkoholgruppe in eine Amingruppe

Als weitere Verbindung **D** ist eine Verbindung bevorzugt, welche mit der Polycarbonsäure oder dem Analogon der Polycarbonsäure eine Reaktion eingehen kann. Beispiele für eine Verbindung **D** sind weitere Amine oder Alkohole, beispielsweise ein C₆-C₂₀ Alkylalkohol oder ein weiteres Mono- oder Diamin. Es können auch mehrere verschiedene Verbindungen **D** eingesetzt werden.

Die Umsetzung der Polycarbonsäure oder dem Analogon der Polycarbonsäure mit mindestens einer Monohydroxy-Verbindung **E** und/oder mit mindestens einer Monoaminverbindung **F**, und gegebenenfalls einer Verbindung **D** zu einem Polymer **P** erfolgt bei der polymeranalogen Reaktion typischerweise derart, dass zur Polycarbonsäure oder dem Analogon der Polycarbonsäure unter Rühren die mindestens eine Monohydroxy-Verbindung **E** und/oder die mindestens eine Monoaminverbindung **F** zugegeben wird und auf die Umsetzungstemperatur aufgeheizt wird. Die Mischung wird weitergerührt und eventuell unter Vakuum oder durch Über- oder Durchleiten eines Gasstromes über beziehungsweise durch die Reaktionsmasse umgesetzt. Die Temperatur für diese Umsetzung ist beispielsweise zwischen 140°C und 200°C. Die Reaktion ist aber auch bei Temperaturen zwischen 150°C und 175°C möglich. Falls zusätzlich zur Monohydroxy-Verbindung **E** eine Monoaminverbindung **F** eingesetzt wird, kann deren Zugabe gleichzeitig mit der Monohydroxy-Verbindung **E** oder aber zu einem späteren Zeitpunkt während dieses Reaktionsschrittes erfolgen.
In einer bevorzugten Ausführungsform wird diese Umsetzung in Gegenwart eines Veresterungskatalysators, insbesondere einer Säure durchgeführt. Bevorzugt handelt es sich bei einer solchen Säure um Schwefelsäure, p-Toluolsulfonsäure, Benzolsulfonsäure, Methansulfonsäure, Phosphorsäure oder phosphorige Säure. Bevorzugt ist Schwefelsäure. Die Entfernung des Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann Luft oder Stickstoff verwendet werden.
Die Umsetzung kann mittels Messung der Säurezahl, beispielsweise durch Titration, verfolgt werden und bei einer gewünschten Säurezahl, so dass der gewünschte Säuregehalt erreicht wird, abgebrochen werden. Die Reaktion wird durch Aufheben des Vakuums und Abkühlen abgebrochen.

In einer bevorzugten Ausführungsform wird eine Polyacrylsäure mit einem Polyoxyethylen welches einseitig mit einer Methylgruppe abgeschlossen ist, verestert und/oder mit einem Monoamin umgesetzt.

Bei der sogenannten polymeranalogen Reaktion können neben Estergruppen und gegebenenfalls Amidgruppen auch Anhydridgruppen gebildet werden, welche in einem zweiten Schritt vollständig oder teilweise mit einer Aminverbindung zu einem Amid umgesetzt werden können. Solche Verfahren werden beispielsweise in WO2005/090416A1 beschrieben.

In einem zweiten Herstellverfahren wird das Polymer **P** über die radikalische Polymerisation hergestellt. Der Weg über die radikalische Polymerisation ist die gängigste Methode, sie ist allerdings bei speziellen Verbindungen erschwert durch die kommerzielle Verfügbarkeit der entsprechenden Monomere und bedarf einer aufwändigen Prozesskontrolle.

Die Erfindung betrifft die Verwendung mindestens eines Polymers **P** zur Herstellung von hydraulisch abbindenden Zusammensetzungen mit verlängerter Verarbeitbarkeit und einer Wasserreduktionsrate von 5 bis 15 %, wobei das Polymer **P** erhältlich ist durch die Polymerisationsreaktion in Gegenwart von mindestens einem Radikalbildner von
(a) mindestens einem ethylenisch ungesättigten Monomer **M**, welches ausgewählt ist aus der Gruppe bestehend aus ungesättigten Mono- oder Dicarbonsäuren, ungesättigten Sulfonsäuren, ungesättigten Phosphorsäuren, ungesättigten Phosphonsäuren oder deren Salze; mit
(b) mindestens einem ethylenisch ungesättigten Carbonsäurederivat **H** der Formel (VI); 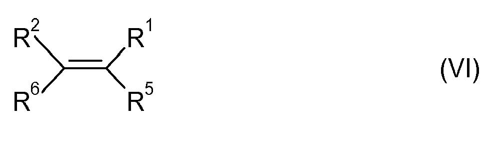 und gegebenenfalls
(c) mindestens einer weiteren ethylenisch ungesättigten Verbindung **L**.

Die Substituenten R¹, R², R⁵, und R⁶ weisen unabhängig voneinander je dieselben Bedeutungen auf, wie sie bereits für die Formel (II) beschrieben wurden.

Das ethylenisch ungesättigte Monomer **M** ist vorzugsweise eine Mono- oder Dicarbonsäure oder das Salz der ungesättigten Mono- oder Dicarbonsäure. Vorzugsweise ist die Mono- oder Dicarbonsäure Acrylsäure oder Methacrylsäure, Maleinsäure, Itaconsäure, Fumarsäure, Citraconsäure, Glutaconsäure, Mesaconsäure oder Crotonsäure, insbesondere Acrylsäure oder Methacrylsäure. Besonders bevorzugt ist die Acrylsäure.

Das mindestens eine ethylenisch ungesättigte Carbonsäurederivat **H** der Formel (VI) ist vorzugsweise ein Carbonsäureester oder ein Carbonsäureamid, besonders bevorzugt ein Acrylsäureester oder ein Methacrylsäureester. Bevorzugte Beispiele für solche Ester sind Poly(oxyalkylen)acrylate. Es können mehrere Monomere der Formel (VI) mit verschiedenen Substituenten R⁵ in Kombination miteinander verwendet werden. Bevorzugt ist beispielsweise die gemeinsame Verwendung von verschiedenen Poly(oxyalkylenen), insbesondere von Poly(oxyethylen) mit Poly(oxypropylen) oder die gemeinsame Verwendung von Poly(oxyethylenen), mit unterschiedlichem Molekulargewicht für die Poly(oxylakylen)(meth)acrylate oder -(meth)acrylamide. Beispiele für geeignete Carbonsäureamide können Amide von ethylenisch ungesättigten Mono- oder Dicarbonsäuren mit Aminverbindungen sein. Besonders bevorzugt sind Amide der (Meth)acrylsäure, vorzugsweise die Poly(oxyalkylen)monoamide. Besonders bevorzugte Amid-Monomere sind die Alkylpoly(oxyalkylen)(meth)acrylamide, besonders bevorzugt die Methylpoly(oxyethylen)(meth)acrylamide, die Methylpoly(oxyethylen)poly(oxypropylen)(meth)acrylamide oder die Methyl(polyoxypropylen)(meth)acrylamide. Es können ein oder mehrere dieser ungesättigten Carbonsäureamide verwendet werden.

Die weitere ethylenisch ungesättigte Verbindung **L** ist vorzugsweise ein Carbonsäureester oder -amid, besonders bevorzugt ein Acrylsäureester- oder amid oder ein Methacrylsäureester oder amid. Beispiele für solche Ester oder Amide sind Poly(oxyalkylen)(meth)acrylate oder - (meth)acrylamide. Es können mehrere verschiedene Verbindungen **L** in Kombination miteinander verwendet werden. Geeignet sind beispielsweise Mono- oder Di-hydroxyethyl(meth)acrylamid, Mono- oder Di-hydroxypropyl(meth)acrylamid, Mono- oder Di-cyclohexyl(meth)acrylamid oder N-Alkyl,-N-hydroxyethyl(meth)acrylamide oder N-Alkyl,-N-hydroxypropyl(meth)acrylamide.

In einem weiteren Aspekt betrifft die vorliegende Erfindung ein Verfahren zur Herstellung einer hydraulisch abbindenden Zusammensetzung mit verlängerter Verarbeitbarkeit, **dadurch gekennzeichnet, dass** einem hydraulischen Bindemittel Wasser und mindestens ein Zusatzmittel umfassend mindestens ein Polymer **P**, wie in einem der vorhergehenden Ansprüchen definiert, getrennt oder als Zusatzmittel vorgemischt in fester oder flüssiger Form, zugegeben wird, wobei die zugegebene Wassermenge bei gleichbleibendem Anfangsausbreitmass um 5 bis 15 % reduziert ist, verglichen mit dem benötigten Wasser für hydraulisch abbindende Zusammensetzungen ohne wasserreduzierendes Zusatzmittel, und wobei das Zusatzmittel umfassend mindestens ein Polymer **P** vorzugsweise in einer Menge von 0.01 bis 10 Gew.-%, bezogen auf das Gewicht des Bindemittels, zugegeben wird.

Das Polymer **P** kann zur erfindungsgemässen Verwendung sowohl in flüssiger als auch in fester Form, sowohl allein oder als Bestandteil eines Dispergiermittels, insbesondere eines Verflüssigers verwendet werden.
Das Polymer **P** kann somit für die erfindungsgemässe Verwendung als einfaches Polymer **P** oder als Mischungen mehrerer Polymere **P** verwendet werden. Es können aber auch Polymere **P** mit anderen Dispergiermitteln oder Dispergiermittelmischungen verwendet werden.

Die vorliegende Erfindung betrifft zusätzlich Dispergiermittel für hydraulisch abbindende Zusammensetzungen umfassend mindestens ein Polymer **P** und mindestens einen weiteren Verglüssiger oder ein weiteres Dispergiermittel, vorzugsweise ausgewählt aus der Gruppe bestehend aus anderen Polycarboxylatethern (PCE), Lignosulfonat, Naphthalinsulfonsäure-Formaldehyd Kondensat, sulfoniertem Melamin-Formaldehyd Kondensat, Melasse, Gluconat und Mischungen davon.

Solche Mischungen umfassend mindestens ein Polymer **P** und mindestens ein weiteres Dispergiermittel oder einen weiteren Verflüssiger sind insbesondere geeignet für die erfindungsgemässe Verwendung zur Herstellung von hydraulisch abbindenden Zusammensetzungen mit verlängerter Verarbeitbarkeit und einer Wasserreduktionsrate von 5 bis 15 %.

Die Polymere **P** oder Zusatzmittel, die die Polymere **P** enthalten, können zur erfindungsgemässen Verwendung weitere Bestandteile enthalten. Beispiele für weitere Bestandteile sind Lösungsmittel oder Additive, wie andere Verflüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Schwindreduzierer, Entschäumer, Luftporenbildner oder Schaumbildner.
Je nach Herstellverfahren oder Reaktionsführung kann das Zusatzmittel zudem zusätzlich zum Polymer **P** freie Verbindungen der Ausgangsstoffe, insbesondere freie Monohydroxyverbindungen wie beispielsweise einseitig endgruppenverschlossenes Poly(oxyalkylen), beispielsweise freies einseitig endgruppenverschlossenes Poly(oxyethylen), insbesondere freies Methoxy-Poly(oxyethylen), enthalten.

Falls das Polymer **P** in flüssiger Form verwendet wird, wird für die Umsetzung vorzugsweise ein Lösungsmittel eingesetzt. Bevorzugte Lösungsmittel sind beispielsweise Alkohole, insbesondere Ethanol oder Isopropanol, und Wasser, wobei Wasser das am meist bevorzugte Lösungsmittel ist.
Das Polymer **P** kann auch in festem Aggregatszustand vorliegen. Unter Polymere im festen Aggregatszustand versteht man im Sinne der Erfindung Polymere, die bei Raumtemperatur im festen Aggregatzustand vorliegen und beispielsweise Pulver, Schuppen, Pellets, Granulate oder Platten sind und sich in dieser Form problemlos transportieren und lagern lassen.

Das Polymer **P** kann im festen Aggregatszustand ein Bestandteil einer sogenannten Trockenmischung, beispielsweise einer Zementzusammensetzung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.
Das Polymer **P** kann auch einer üblichen hydraulisch abbindenden Zusammensetzung mit oder kurz vor oder kurz nach der Zugabe des Wassers beigegeben werden. Als besonders geeignet gezeigt hat sich hierbei die Zugabe des Polymers **P** in Form einer wässrigen Lösung oder Dispersion, insbesondere als Anmachwasser oder als Teil des Anmachwassers. Die Herstellung der wässrigen Lösung oder Dispersion erfolgt durch Zusetzen von Wasser bei der Herstellung des Polymers **P** oder durch nachträgliches Vermengen von Polymer **P** mit Wasser. Je nach Art des Polymers **P** entsteht eine Dispersion oder eine Lösung. Bevorzugt wird eine Lösung.
Die wässrige Lösung oder Dispersion kann weitere Bestandteile enthalten. Beispiele hierfür sind Lösungsmittel oder Additive, wie sie in der Bauchemie geläufig sind, insbesondere oberflächenaktive Stoffe, Stabilisatoren gegen Hitze und Licht, Farbstoffe, Entschäumer, Beschleuniger, Verzögerer, Schaumbildner.

Das Polymer **P** verfügt über besonders gute Eigenschaft um eine hydraulisch abbindende Zusammensetzung mit einer vordefinierten gewünschten Wasserreduktionsrate mit verbesserter, d.h. verlängerter, Verarbeitbarkeit herzustellen. Das heisst, dass die resultierende Mischung ein bedeutend grösseres Fliessverhalten aufweist bei einer Wasserreduktion zwischen 5 und 15 % im Vergleich zu einer Zusammensetzung ohne wasserreduzierende Zusatzmittel. Das Fliessverhalten wird typischerweise über das Ausbreitmass gemessen. Bei der Verwendung von Hochleistungsverflüssigern müsste man so geringe Dosierungen einsetzen, dass das Fliessverhalten und somit die Verarbeitbarkeit deutlich verschlechtert würde. Andererseits kann man zum Erreichen der gewünschten Verarbeitbarkeit und einer Wasserreduktion von 5 bis 15% eine geringere Dosierung verglichen mit den herkömmlichen Verflüssigern der ersten Generation, beispielsweise den Lignosulfonaten einsetzen, was sowohl ökologisch wie auch ökonomisch ein grosser Vorteil darstellt. Zudem sind die mechanischen Eigenschaften der ausgehärteten hydraulischen Zusammensetzung erhöht im Vergleich zu den mechanischen Eigenschaften der ausgehärteten hydraulischen Zusammensetzung, welche kein Polymer **P** enthalten, welche aber zum Erreichen einer vergleichbaren Verarbeitbarkeit einen Zusatz von 10 bis15 % mehr Wasser benötigen.

Das Polymer **P** hat somit als Dispergiermittel, insbesondere als Verflüssiger, hervorragende Eigenschaften zur Herstellung von hydraulisch abbindenden Zusammensetzungen mit verlängerter Verarbeitbarkeit und einer Wasserreduktionsrate von 5 bis 15 %. Zudem sind mit dem Polymer **P** Zusammensetzungen möglich, die sich nicht verfärben.

### Beispiele

Die Erfindung wird nun anhand von Beispielen näher erläutert.

### 1. Verwendete Polymere P

**Tabelle 1 Verwendete Abkürzungen. *Mw = mittleres Molekulargewicht**

| **Abkürzung** | **Bedeutung** | **Mw*** |
|---|---|---|
| PEG520 | Poly(oxyethylen) ohne terminale OH-Gruppen | 520 g/mol |
| PEG1000 | Poly(oxyethylen) ohne terminale OH-Gruppen | 1000 g/mol |
| PEG3000 | Poly(oxyethylen) ohne terminale OH-Gruppen | 3000 g/mol |
| PEG5000 | Poly(oxyethylen) ohne terminale OH-Gruppen | 5000 g/mol |
| EO/PO(70/30)2000 | Block-Copolymer aus Ethylenoxid und Propylenoxid im Verhältnis 70:30 ohne terminale OH-Gruppen | 2000 g/mol |

Es wurden die in Tabelle 2 angegebenen Polymere **P-1** bis **P-8** sowie die Vergleichsbeispiele **V-1** bis **V-3** mittels polymeranaloger Umsetzung aus Polyacrylsäure mit den korrespondierenden Alkoholen und/oder Aminen nach bekannter Art und Weise hergestellt. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen.

So wurde beispielsweise Polymer **P-4** mittels polymeranaloger Umsetzung folgendermassen hergestellt: In einen Rundkolben mit mechanischem Rührer (IKA®-Rührwerk), Thermometer, Gaseinleitrohr und Destillationsbrücke wurden 160 g einer 50-prozentigen wässrigen Lösung (entspricht etwa 1 Mol Säureeinheiten) von Polyacrylsäure (PAS, mit einem mittleren Molekulargewicht M_{w} von etwa 5000 g/mol) vorgelegt. Die Mischung wurde auf 50°C erwärmt und 210 g Polyethyleneglykol-Monomethylether (MPEG, mit einem mittleren Molekulargewicht M_{w} von etwa 520 g/mol) und 3 g Jeffamine® M-2070 zugegeben. Die Reaktionsmischung wurde unter N₂-Strom auf 175°C erwärmt. Das in der Mischung enthaltene Wasser sowie das Reaktionswasser wurden kontinuierlich unter N₂-Strom abdestilliert. Mit Erreichen der Temperatur wurden 3 g einer 66%igen Kalium-Acetat-Lösung zur Reaktionsmischung gegeben und ein Vakuum von 80 mbar angelegt. Nach 2 ½ Stunden war ein vollständiger Reaktionsumsatz erreicht. Die Polymerschmelze wurde erstarren gelassen oder aber nach dem Abkühlen auf <100°C mit 1160 g Wasser versetzt, um eine 20%ige Polymerlösung zu erhalten.

Die Polymere **P-1** bis **P-8** sowie Polymere für die Vergleichsbeispiele **V1 - V3** wurden in gleicher Weise wie Polymer **P-4** hergestellt.

Bei Vergleichsbeispiel **V-4** wurde ein kommerziell erhältlicher, auf Naphthalinsulfonsäure-Formaldehyd-Kondensat-Basis hergestellter Verflüssiger (beispielsweise Flube OS 39, erhältlich bei Bozzetto AG) verwendet. Bei Vergleichsbeispiel **V-5** wurde ein kommerziell erhältlicher, auf Lignosulfonat-Basis hergestellter Verflüssiger (beispielsweise Borresperce® Ca, erhältlich bei Borregaard LignoTech AG) verwendet. Bei Vergleichsbeispiel **V-6** wurden kommerziell erhältliche Lignosulfonate und Karbohydrate (beispielsweise Borresperse® Ca, erhältlich bei Borregaard LignoTech AG und Melasse, erhältlich bei Zuckerfabrik Frauenfeld AG) im Verhältnis 55:4 (Trockengehalt) abgemischt und als Verflüssiger verwendet. Bei den Vergleichsbeispielen V-7 und V-8 wurden keine Verflüssiger verwendet.

**Tabelle 2 Erfindungsgemäss verwendete Polymere P-1 bis P-8 bzw. Vergleichspolymere V-1, V-2 und V-3 enthalten die Struktureinheiten A der Formel (I) und die Struktureinheiten B der Formel (II) mit R²=H, R³=H, R⁴=COOM, R⁶=H, M= H⁺, Na⁺;* bedeutet Molverhältnis der verschiedenen R⁵ Seitenketten; Mol-% bedeutet Mol-% der einzelnen Einheiten im Endpolymer**

| **Nr.** | **R¹** | **R⁵** | | **Mw** | ***Mol-%** im Endpolymer* | ***m* /*n*** |
|---|---|---|---|---|---|---|
| **P-1** | -CH3 | -COO-PEG1000-CH3: | 99.5 | 40000 | *m* = 60 | 1.5 |
| | | -CO-NH-EO/PO(70/30)2000-CH3 | 0.5* | | *n* = 40 | |
| | | | | | *p*=0 | |
| **P-2** | -H | -COO-PEG1000-CH3: | 99.8 | 35000 | *m* = 57 | 1.3 |
| | | -CO-NH-EO/PO(70/30)2000-CH3 | 0.2* | | *n* = 43 | |
| | | | | | *p*=0 | |
| **P-3** | -H | -COO-PEG1000-CH3: | 99.7 | 30000 | *m* = 66 | 1.9 |
| | | -CO-NH-EO/PO(70/30)2000-CH3 | 0.3* | | *n* = 34 | |
| | | | | | *p*=0 | |
| **P-4** | -H | -COO-PEG520-CH3: | 99.7 | 20000 | *m* = 60 | 1.5 |
| | | -CO-NH-EO/PO(70/30)2000-CH3 | 0.3* | | *n* = 40 | |
| | | | | | *p*=0 | |
| **P-5** | -H | -C00-PEG1000-CH3: | 99.7 | 30000 | m = 60 | 1.5 |
| | | -CO-NH-EO/PO(70/30)2000-CH3 | 0.3* | | *n* = 40 | |
| | | | | | *p*=0 | |
| **P-6** | -H | -COO-PEG520-CH3: | 65.7 | 25000 | *m* = 56 | 1.3 |
| | | -COO-PEG1000-CH3: | 34 | | *n* = 44 | |
| | | -CO-NH-EO/PO(70/30)2000-CH3 | 0.3 | | *p* = 0 | |
| **P-7** | -H | -COO-PEG520-CH3: | 45.1 | 30000 | *m* = 58 | 1.4 |
| | | -COO-PEG1000-CH3: | 54.6 | | *n* = 42 | |
| | | -CO-NH-EO/PO(70/30)2000-CH3 | 0.3 | | *p* = 0 | |
| **P-8** | - CH3 | -COO-PEG1000-CH3: | 100 | 40000 | m = 60 | 1.5 |
| | | | | | *n*=40 | |
| | | | | | *p*=0 | |
| **V-1** | -CH3 | -COO-PEG1000-CH3: | 53.9 | 50'000 | *m* = 75.5 | 3.1 |
| | | -COO-PEG3000-CH3: | 45.3 | | *n* = 24.5 | |
| | | -CO-NH-EO/PO(70/30)2000-CH3 | 0.8 | | *p* = 0 | |
| **V-2** | -H | -COO-PEG1000-CH3: | 29.3 | 40'000 | *m* = 76.3 | 3.2 |
| | | -COO-PEG3000-CH3: | 70.4 | | *n* = 23.7 | |
| | | -CO-NH-EO/PO(70/30)2000-CH3 | 0.3 | | *p* = 0 | |
| **V-3** | -H | -COO-PEG1000-CH3: | 18.8 | 35'000 | *m* = 84.1 | 5.3 |
| | | -COO-PEG3000-CH3: | 79.9 | | *n* = 15.9 | |
| | | -CO-NH-EO/PO(70/30)2000-CH3 | 1.3 | | *p* = 0 | |

### 2. Mörteltests

Die Wirksamkeit der erfindungsgemässen Polymeren wurde im Mörtel getestet.

| Zusammensetzung der Mörtelmischung **(MM)**: (Grösstkorn 8mm) | Menge |
|---|---|
| Zement (Schweizer CEM I 42.5) | 750 g |
| Kalksteinfiller | 141 g |
| Sand 0-1 mm | 738 g |
| Sand 1-4 mm | 1107 g |
| Sand 4-8 mm | 1154 g |

Die Sande, der Filler und der Zement wurden 1 Minute in einem Hobart-Mischer trocken gemischt. Innerhalb von 30 Sekunden wurde das Anmachwasser, in dem die in Tabelle 3 angegebene Menge bezogen auf den Zement einer 20-%igen wässrigen Lösung eines Zusatzmittels mit dem erfindungsgemässen Polymer **P-1** bis **P-8** oder einem Vergleichspolymer **V-1** bis **V-3**, beziehungsweise der Gesamtmenge eines Vergleichsverflüssigers **V-4** bis **V-6**, gelöst war, zugegeben und noch weitere 2.5 Minuten gemischt. Die 20-%ige wässrige Lösung, welche 20 Gew.-% des erfindungsgemässen Polymers enthält, enthält zudem etwa 1 Gew.-% Entschäumer. Die Gesamt-Mischzeit nass war 3 Minuten. Der Wasser/Zement-Wert (w/z-Wert) betrug 0.48. Die 10% Wasserreduktion werden eingestellt, indem eine Vergleichsmörtelmischung ohne wasserreduzierendes Zusatzmittel (Vergleichsbeispiel **VM-8**) auf ein Ausbreitmass (0 min) von 195 - 200 mm durch Wasserzugabe eingestellt wird. Die benötigte Wassermenge in der für die Versuche verwendeten Mörtelmischung wird dann um 10% verringert.

Das Ausbreitmass des Mörtels wurde gemäss EN 1015-3 bestimmt.

**Tabelle 3: Ausbreitmass (ABM) in mm nach 0, 30, 60 und 90 Minuten (min). Die Gew-% der Zusatzmittel sind angegeben als Gew.-% einer 20-% wässrigen Lösung mit den Polymeren P-1 bis P-8 und V-1 bis V-3 beziehungsweise als Gew-% des Gesamtgewichts der Zusatzmittel V-4 bis V-6, die Gew.-% jeweils bezogen auf den Zement.**

| **Nr.** | **Zusatzmittel** | **w/z** | **Wasserreduktion** | **Gew.- % auf Zement** | **ABM (mm)** | | | | **ΔABM in % nach 90 min** |
|---|---|---|---|---|---|---|---|---|---|
| | | | | | **0 min** | **30 min** | **60 min** | **90 min** | |
| **M-1** | **P-1** | 0.48 | 10% | 0.6 | 203 | 192 | 190 | 184 | 9.3% |
| **M-2** | **P-2** | 0.48 | 10% | 0.6 | 195 | 180 | 188 | 185 | 5.2% |
| **M-3** | **P-3** | 0.48 | 10% | 0.6 | 224 | 230 | 212 | 192 | 14.3% |
| **M-4** | **P-4** | 0.48 | 10% | 0.6 | 216 | 210 | 200 | 184 | 14.8% |
| **M-5** | **P-5** | 0.48 | 10% | 0.6 | 202 | 205 | 206 | 196 | 3% |
| **M-6** | **P-6** | 0.48 | 10% | 0.6 | 182 | 180 | 185 | 178 | 2.2% |
| **M-7** | **P-7** | 0.48 | 10% | 0.6 | 192 | 190 | 190 | 175 | 8.8% |
| **M-8** | **P-8** | 0.48 | 10% | 0.6 | 208 | 192 | 192 | 184 | 11.5% |
| **VM-1** | **V-1** | 0.48 | 10% | 0.6 | 230 | 216 | 190 | 172 | 25.2% |
| **VM-2** | **V-2** | 0.48 | 10% | 0.6 | 230 | 185 | 160 | 148 | 35.6% |
| **VM-3** | **V-3** | 0.48 | 10% | 0.6 | 230 | 168 | 150 | 140 | 39% |
| **VM-1'** | **V-1** | 0.48 | 10% | 0.35 | 205 | 175 | 162 | 146 | 28.8% |
| **VM-2'** | **V-2** | 0.48 | 10% | 0.34 | 198 | 164 | 152 | 148 | 25.2% |
| **VM-3'** | **V-3** | 0.48 | 10% | 0.34 | 200 | 165 | 155 | 145 | 27.5% |
| **VM-4** | **V-4** | 0.48 | 10% | 1.4 | 204 | 168 | 150 | 145 | 28.9% |
| **VM-5** | **V-5** | 0.48 | 10% | 2 | 198 | 150 | 145 | 138 | 30.32% |
| **VM-6** | **V-6** | 0.48 | 10% | 1.8 | 202 | 152 | 145 | 140 | 30.7% |
| **VM-7** | **-** | 0.48 | 10% | - | 160 | 146 | 145 | 132 | 17.5% |
| **VM-8** | **-** | 0.54 - | - | - | 204 | 190 | 183 | 177 | 13.2% |

Die Resultate in Tabelle 3 zeigen, dass die erfindungsgemässen Polymere hervorragende verflüssigende Eigenschaften aufweisen verglichen mit dem herkömmlichen Polymeren **V-1, V-2** und **V-3** und den Vergleichsverflüssigern **V-4** bis **V-8**. Dies zeigen vor allem die Werte des Ausbreitmasses nach 30 bis 90 Minuten, wo sich das Ausbreitmass mit den Polymeren **P-1** bis **P-8** über 90 Minuten relativ konstant hält und höchstens 15% gegenüber dem Anfangsausbreitmass nach 0 Minuten abnimmt. Besonders gute Resultate wurden mit den Polymeren **P-1, P-2**, und **P-5** bis **P-7** erzielt. Das heisst, besonders gute Resultate werden erzielt, wenn das Polymer ein tiefes Verhältnis m/n von 1.2 bis 1.6 aufweist.
Werden die Vergleichspolymere **V-1** bis **V-3** gleich dosiert wie die erfindungsgemässen Polymere (Beispiele Nr. **VM-1** bis **VM-3**), ist das Anfangsausbreitmass zu hoch und die Mörtelmischung kann separieren und ist somit nicht brauchbar. Zudem nimmt das Ausbreitmass bis nach 90 Minuten über 25% ab, verglichen mit dem Anfangsausbreitmass. Dieser Abfall des Ausbreitmasses ist in der Praxis nicht erwünscht.
Werden die Vergleichspolymere **V-1** bis **V-3** tiefer dosiert als die erfindungsgemässen Polymere (Beispiele Nr. **VM-1**' bis **VM-3**'), sodass das Anfangsausbreitmass am Anfang gleich ist wie bei den erfindungsgemässen Polymeren, nimmt das Ausbreitmass bis nach 90 Minuten ebenfalls über 25% ab, verglichen mit dem Anfangsausbreitmass, was in der Praxis nicht erwünscht ist.
Bei den Vergleichsbeispielen **VM-4** bis **VM-6** basierend auf Lignin- oder Naphthalinsulfonaten wurde mit entsprechender Dosierung das Anfangsausbreitmass auf ungefähr 200 mm eingestellt, damit die Werte mit den Erfindungsbeispielen verglichen werden können. Um dieses Anfangsausbreitmass zu erreichen, müssen die herkömmlichen Verflüssiger viel höher dosiert werden. Zudem nimmt das Ausbreitmass über 90 Minuten um über 28% ab, verglichen mit dem Anfangsausbreitmass.
Beim Vergleichsbeispiel **VM-7** wurde kein wasserreduzierendes Zusatzmittel und kein Polymer **P** verwendet. Somit liegt das Anfangsausbreitmass bei gleichem w/z-Wert wie bei den Erfindungsbeispielen viel tiefer und die Mischung kann kaum verarbeitet werden.
Beim Vergleichsbeispiel **VM-8** wurde ebenfalls kein wasserreduzierendes Zusatzmittel und kein Polymer **P** verwendet, aber mit Zugabe von mehr Wasser (w/z-Wert 0.54 und somit 10% höher als bei den vorhergehenden Beispielen) ein Anfangsausbreitmass von etwa 200 mm erreicht. Die Verarbeitbarkeit liegt damit etwa im gewünschten Bereich, allerdings weisen Mörtel- und Betonzusammensetzungen mit einem höheren w/z-Wert und somit einem höheren Wasseranteil erfahrungsgemäss wesentlich tiefere Festigkeitswerte und somit schlechtere mechanische Eigenschaften auf.
Es wird also gewünscht, Beton- und Mörtelmischungen herzustellen, welche in etwa eine Verarbeitbarkeit aufweisen, wie sie bei **VM-8** erreicht werden, welche allerdings weniger Wasser benötigen, das heisst bei denen die Wasserreduktion bei etwa 5 bis 15% liegt, und sie somit bessere Festigkeitswerte aufweisen. Dies wird mit den erfindungsgemäss verwendeten Polymeren **P-1** bis **P-8** erreicht.

### 3. Betonversuche

Die Wirksamkeit der erfindungsgemässen Polymeren wurde zusätzlich im Beton getestet.

| Zusammensetzung der Betonmischung **(BM)**: (Grösstkorn 32mm) | Menge |
|---|---|
| Zement (Schweizer CEM I 42.5) | 750 g |
| Kalksteinfiller | 235 g |
| Sand 0-1 mm | 1170 g |
| Sand 1-4 mm | 1355 g |
| Sand 4-8 mm | 515 g |
| Kies 8-16 mm | 608 g |
| Kies 16-32 mm | 795 g |

Die Kiese, die Sande, der Filler und der Zement wurden 30 Sekunden in einem Fallmischer trocken gemischt. Innerhalb von 30 Sekunden wurde das Anmachwasser, in dem die in Tabelle 4 angegebene Menge bezogen auf den Zement einer 20-%igen wässrigen Lösung eines Zusatzmittels mit dem erfindungsgemässen Polymer **P-1** oder dem Vergleichspolymer **V-1**, beziehungsweise der Gesamtmenge einer ergindungsgemässen Formulierung **F-P1** (entspricht einer 28.25 %-igen wässrigen Lösung) oder eines Vergleichsverflüssigers **V-5**, gelöst war, zugegeben und noch weitere 1.5 Minuten gemischt. Die 20-%ige wässrige Lösung, welche 20 Gew.-% des erfindungsgemässen Polymers beziehungsweise des Vergleichspolymers enthält, enthält zudem etwa 1 Gew.-% Entschäumer. Die Gesamt-Mischzeit nass war 2 Minuten. Der Wasser/Zement-Wert (w/z-Wert) betrug 0.6. Die 10 % Wasserreduktion werden eingestellt, indem eine Betonmischung ohne wasserreduzierendes Zusatzmittel auf ein Ausbreitmass (0 min) von 50-60 cm durch Wasserzugabe eingestellt wird. Die benötigte Wassermenge wird dann um 10% verringert.
Die Formulierung **F-P1** enthält 13 Gew.-% Polymer **P-1**, 13 Gew.-% eines auf Lignosulfonat-Basis hergestellter Verflüssiger (Borresperce ® Ca, erhältlich bei Borregaard LignoTech AG), 2.25 Gew.-% Melasse (erhältlich bei Zuckerfabrik Frauenfeld AG), in 71.75 Gew.-% Wasser, was einer 28.25 %-igen wässrigen Lösung entspricht.

**Tabelle 4: Ausbreitmass (ABM) in cm nach 0, 30, 60 und 90 Minuten (min)**

| **Nr** | **Zusatzmittel** | **w/z** | **Wasser. reduktion** | **Gew.-% auf Zement** | **ABM (cm) ABM (cm)** | | | | **ΔABM in % nach 90** min |
|---|---|---|---|---|---|---|---|---|---|
| | | | | | **0 min** | **30 min** | **60 min** | **90 min** | |
| **B-1** | **P-1** | 0.6 | 10% | 0.6 | 54 | 51 | 49 | 46 | 14.8% |
| **B-2** | **F-P1** | 0.6 | 10% | 0.6 | 52 | 46 | 43 | 43 | 17.3% |
| **VB-1** | **V-1** | 0.6 | 10% | 0.35 | 51 | 44 | 41 | 38 | 25.5% |
| **VB-5** | **V-5** | 0.6 | 10% | 1.4 | 52 | 41 | 39 | 36 | 30.7% |
| **VB-8** | **-** | 0.67 | | - | 53 | 46 | 44 | 42 | 20.7% |

Die Resultate in der Tabelle 4 zeigen, dass auch in Betonzusammensetzungen mit dem Polymer **P-1** eine längere Verarbeitbarkeit erreicht wird als bei Zusammensetzungen mit einem herkömmlichen Verflüssiger und ohne Polymer **P**. Selbst mit Formulierungen, welche das Polymer **P-1** enthalten **(F-P1**) wird eine längere Verarbeitbarkeit erreicht.
Beim Vergleichsbeispiel **VB-1** muss weniger Polymer dosiert werden, um das gewünschte Anfangsausbreitmass zu erreichen. Allerdings nimmt dann die Verarbeitbarkeit über Zeit stark ab und die Betonzusammensetzung ist schlecht verarbeitbar.
Beim Vergleichsbeispiel **VB-5** liegt die Dosierung zwar viel höher, um das gewünschte Anfangsausbreitmass zu erreichen. Trotzdem nimmt die Verarbeitbarkeit über Zeit stark ab und die Betonzusammensetzung ist ebenfalls kaum noch verarbeitbar.
Beim Vergleichsbeispiel **VB-8** muss eine um 10% höhere Wassermenge eingesetzt werden, um das gewünschte Anfangsausbreitmass zu erreicht. Einerseits nimmt die Verarbeitbarkeit stärker ab als mit dem erfindungsgemässen Polymer **P**, andererseits nimmt die Festigkeit der hergestellten Betonzusammensetzung durch den erhöhten Wasserbedarf stark ab und die Betonzusammensetzung weist dadurch schlechtere mechanische Eigenschaften auf (Tabelle 5).

Zur Bestimmung der mechanischen Eigenschaften wurden die Druckfestigkeiten an Würfeln (120x120x120mm) mittels einer hydraulischen Presse ermittelt (Tabelle 5).

**Tabelle 5: Druckfestigkeiten in N/mm² nach 1 und 28 Tagen (d) (Betontemperatur 30 °C).**

| **Nr.** | **Zusatzmittel** | **w/z** | **Gew.-% auf Zement** | **Druckfestigkeit (N/mm²)** | |
|---|---|---|---|---|---|
| | | | | **1 d** | **28 d** |
| **B-2** | **F-P1** | 0.6 | 0.6 | 19.8 | 38.9 |
| **VB-8** | **-** | 0.67 - | - | 15.1 | 31.7 |

In Tabelle 5 ist ersichtlich, dass eine Betonmischung ohne wasserreduzierendes Zusatzmittel aber mit einem höheren w/z-Wert, um das gewünschte Anfangsausbreitmass zu erhalten, deutlich schlechtere Festigkeitswerte nach einem und nach 28 Tagen aufweist verglichen mit einer Betonmischung, welche die Formulierung **F-P1** umfassend das Polymer **P-1** enthält.

Anhand der Beispiele konnte gezeigt werden, dass Polymere **P**, welche ein Molverhältnis der Säureeinheiten zu Struktureinheiten **B** (*m*/*n*) von zwischen 1 und 2, vorzugsweise zwischen 1.2 und 1.6, aufweisen, hervorragend geeignet sind, um hydraulisch abbindende Zusammensetzungen mit verlängerter Verarbeitbarkeit, verglichen mit hydraulisch abbindenden Zusammensetzungen ohne Polymer **P** aber mit herkömmlichen wasserreduzierenden Zusatzmitteln, und einer Wasserreduktionsrate von 5 bis 15 %, verglichen mit hydraulisch abbindenden Zusammensetzungen ohne wasserreduzierendes Zusatzmittel, herzustellen. Das heisst, mit den erfindungsgemässen Polymeren **P** kann bei hydraulisch abbindenden Zusammensetzungen die gewünschte Kombination von verlängerter Verarbeitbarkeit mit geringer Wasserreduktion von 5 bis 15% erreicht werden.

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

## Patentansprüche

1. Verwendung eines Zusatzmittels umfassend mindestens eine Polymer **P** zur Herstellung von hydraulisch abbindenden Zusammensetzungen mit verlängerter Verarbeitbarkeit und einer Wasserreduktionsrate von 5 bis 15 %, verglichen mit hydraulisch abbindenden Zusammensetzungen ohne wasserreduzierendes Zusatzmittel, wobei das Polymer **P** umfasst:
a) *m* Mol-% mindestens einer Säureeinheit **A** der Formel (I); und 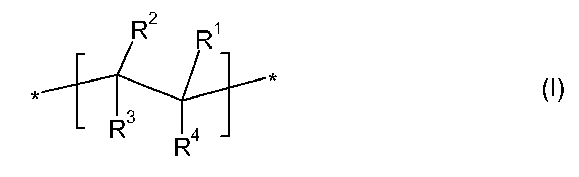
b) *n* Mol-% mindestens einer Struktureinheit B der Formel (II); 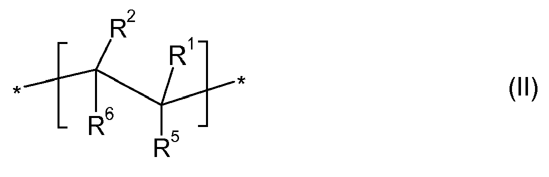 und gegebenenfalls
c) *p* Mol-% mindestens einer weiteren Struktureinheit **C**;
wobei R¹ und R² je unabhängig voneinander für H, COOM, CH₂COOM oder eine Alkylgruppe mit 1 bis 5 Kohlenstoffatomen stehen,
wobei R³ unabhängig voneinander für H, CH₃, COOM oder CH₂COOM steht; und
wobei R⁴ unabhängig voneinander für einen Rest der Carbonsäure,
oder wobei R³ mit R⁴ einen Ring bildet zu -CO-O-CO-;
wobei M für H, Alkalimetall, Erdalkalimetall, Ammonium, Alkyl-Ammonium, oder Mischungen davon steht;
wobei R⁵ unabhängig voneinander für einen Rest der Formel (III) steht
-(CH₂)ₓR⁷-(R⁸O)_{y}- R⁹ (III)
wobei R⁷ je unabhängig voneinander für ein Ester-, Ether, Amid- oder oder Imid-Verbindungsstück, vorzugsweise für -COO- oder CONHsteht;
wobei R⁸ je unabhängig voneinander für eine C₂ - C₆ Alkylengruppe, vorzugsweise eine C₂ - C₄ Alkylengruppe oder eine Mischung davon steht,
wobei R⁹ je unabhängig voneinander für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht;
wobei x unabhängig voneinander für den Wert 0 oder 1 steht;
wobei y unabhängig voneinander für den Wert 3 - 250 steht;
wobei R⁶ unabhängig voneinander für H, CH₃, COOM, CH₂COOM oder einen Substituenten wie für R⁵ definiert steht;
wobei *m*, *n, p* unabhängig voneinander Zahlen bedeuten, wobei die Summe *m*+*n*+*p* = 100, und *m*>0, *n*>0, und *p*≥0 bedeuten; und wobei das Verhältnis *m*/*n* zwischen 1 und 2 beträgt.

2. Verwendung eines Zusatzmittels gemäss Anspruch 1, **dadurch gekennzeichnet, dass** das Verhältnis *m*/*n* zwischen 1.2 und 1.7 beträgt.

3. Verwendung eines Zusatzmittels gemäss einem der vorhergehenden Ansprüche, wobei das Polymer **P** erhältlich ist durch oder hergestellt wird mittels polymeranaloger Reaktion der Veresterung und/oder Amidierung einer Polycarbonsäure oder einem Analogon davon.

4. Verwendung eines Zusatzmittels gemäss Anspruch 3, wobei das Polymer **P** erhältlich ist durch die Reaktion von
a) mindestens einer Polycarbonsäure oder einem Analogon einer Polycarbonsäure; und
b) mindestens einer Verbindung ausgewählt aus der Gruppe bestehend aus einer Monohydroxyverbindung **E** der Formel (IV) und einer Monoaminverbindung **F** der Formel (V);
wobei
HO-(R⁸O)_{y}-R^{9'} (IV)
wobei
NH₂-(R⁸O)_{y}-R⁹ (V)
wobei R⁸ je unabhängig voneinander eine C₂ - C₄ Alkylengruppe bedeutet mit einer Reihenfolge der (R⁸O)-Einheiten in irgendeiner möglichen Sequenz;
wobei R^{9'} für einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht;
wobei R⁹ für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht; und
wobei y je unabhängig voneinander je den Werte 3 - 250 aufweist;
und gegebenenfalls
c) mindestens einer weiteren Verbindung **D**.

5. Verwendung eines Zusatzmittels gemäss einem der Ansprüche 3 bis 4, **dadurch gekennzeichnet, dass** das Analogon der Polycarbonsäure des Polymers **P** ausgewählt ist aus der Gruppe Säuresalze, Säurehalogenide und Säureanhydride.

6. Verwendung eines eines Zusatzmittels gemäss einem der Ansprüche 1 bis 2, **dadurch gekennzeichnet, dass** das Polymer **P** erhältlich ist durch oder hergestellt wird mittels einer radikalischen Polymerisationsreaktion.

7. Verwendung eines eines Zusatzmittels gemäss Anspruch 6, **dadurch gekennzeichnet, dass** das Polymer **P** erhältlich ist durch die Polymerisationsreaktion in Gegenwart von mindestens einem Radikalbildner von
a) mindestens einer ethylenisch ungesättigten Mono- oder Dicarbonsäure **M** oder einem Analogon von einer ungesättigten Mono- oder Dicarbonsäure; mit
b) mindestens einem ethylenisch ungesättigten Carbonsäurederivat **H** der Formel (VI); 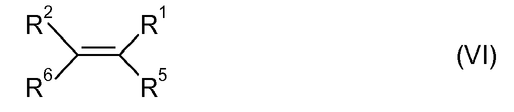 und gegebenenfalls
c) mindestens einer weiteren ethylenisch ungesättigten Verbindung **L**,
wobei R¹ und R² je unabhängig voneinander für H, COOM, CH₂COOM oder eine Alkylgruppe mit 1 bis 5 Kohlenstoffatomen stehen,
wobei R⁶ unabhängig voneinander für H, CH₃, COOM, CH₂COOM oder einen Substituenten wie für R⁵ definiert steht;
wobei M für H, Alkalimetall, Erdalkalimetall, Ammonium, Alkyl-Ammonium, oder Mischungen davon steht;
wobei R⁵ unabhängig voneinander für einen Rest der Formel (III) steht
-(CH₂)ₓR⁷-(R⁸O)_{y}- R⁹ (III)
wobei R⁷ je unabhängig voneinander für ein Ester-, Ether-, Amid- oder Imid-Verbindungsstück, vorzugsweise für -COO- oder CONHsteht;
wobei R⁸ je unabhängig voneinander für eine C₂ - C₆ Alkylengruppe, vorzugsweise eine C₂ - C₄ Alkylengruppe oder eine Mischung davon steht,
wobei R⁹ je unabhängig voneinander für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht;
wobei x unabhängig voneinander für den Wert 0 oder 1 steht; und
wobei y unabhängig voneinander für den Wert 3 - 250 steht.

8. Verwendung eines Zusatzmittels gemäss einem der vorhergehenden Ansprüche, wobei im Polymer **P** R¹ H oder CH₃ ist und R², R³, R⁶ für H stehen und R⁴ für COOM steht.

9. Verwendung gemäss einem der vorhergehenden Ansprüche, **dadurch gekennzeichnet, dass** (R³O) mindestens 30 Mol-% (C₂H₄O)-Einheiten, vorzugsweise 50 bis 100 Mol-% (C₂H₄O)-Einheiten, noch mehr bevorzugt 80 bis 100 Mol-% (C₂H₄O)-Einheiten umfasst, bezogen auf die Gesamtmolmenge aller (R³O)-Einheiten.

10. Verwendung gemäss einem der vorhergehenden Ansprüche, wobei das Polymer **P** 30 bis 66 Mol-%, vorzugsweise 50 bis 63 Mol-% Säureeinheit **A,** 20 bis 50 Mol-%, vorzugsweise 34 bis 44 Mol-% der Struktureinheit **B** der Formel (I), und gegebenenfalls 0 bis 40 Mol-%, vorzugsweise 0 bis 1 Mol-% der Struktureinheit **C** umfasst, jeweils bezogen auf die Gesamtmolmenge der Struktureinheiten von **A, B**, und **C** im Polymer **P**.

11. Verfahren zur Herstellung einer hydraulisch abbindenden Zusammensetzung mit verlängerter Verarbeitbarkeit, **dadurch gekennzeichnet, dass** einem hydraulischen Bindemittel Wasser und mindestens ein Zusatzmittel umfassend mindestens ein Polymer **P**, wie in einem der vorhergehenden Ansprüchen definiert, in fester oder flüssiger Form, zugegeben wird, wobei die zugegebene Wassermenge, bei gleichbleibendem Anfangsausbreitmass, um 5 bis 15 % reduziert ist verglichen mit dem benötigten Wasser für hydraulisch abbindende Zusammensetzungen ohne wasserreduzierendes Zusatzmittel.

12. Verfahren nach Anspruch 11, **dadurch gekennzeichnet, dass** das hydraulische Bindemittel ausgewählt ist aus der Gruppe bestehend aus Zement oder Mischungen aus Zement mit Flugaschen, Silica fume, Schlacke, Hüttensande oder Kalksteinfiller, oder Gips, gebrannter Kalk. oder Mischungen der genannten hydraulischen Bindemittel.

13. Dispergiermittel für hydraulisch abbindende Zusammensetzungen umfassend mindestens ein Polymer **P**, wie in einem der vorhergehenden Ansprüchen definiert, und mindestens ein Fliessmittel ausgewählt aus der Gruppe bestehend aus Lignosulfonat, Naphthalinsulfonsäure-Formaldehyd-Kondensat, sulfoniertem Melamin-Formaldehyd-Kondensat, Melasse, Gluconat und Mischungen davon.
